# EUROPÄISCHE PATENTANMELDUNG

(11) **EP 0 825 504 A2**
(43) Veröffentlichungstag der Anmeldung: **25.02.1998**
(21) Anmeldenummer: 97113689.0
(22) Anmeldetag: 07.08.1997
(51) Int. Cl.: G05B 19/042

(54) **Vorrichtung zur Verbindung eines elektrischen Hausgeräts mit einem Steuerungssystem**

(30) Priorität: 23.08.1996 DE 19634143
(71) Anmelder: Bosch-Siemens Hausgeräte GmbH, 81669 München (DE)
(72) Erfinder: Herrmann, Bernd-Peter, Dipl.-Ing., 10715 Berlin (DE)

(57) **Zusammenfassung**

Die Erfindung befaßt sich mit einer Vorrichtung zur Verbindung eines elektrischen Hausgeräts mit einem Steuerungsystem, wobei die Vorrichtung das Hausgerät (1) mit dem Steuerungssystem (2) über eine Steuerdatenleitung (3) und eine Energieversorgungsleitung (4) verbindet. Die Vorrichtung besitzt steuerungssystemseitig Anschlußelemente (5) für den steuerungssystemseitigen Anschluß einer Lichtleiter-Steuerdatenleitung (31) und Anschlußelemente (6) für den steuerungssystemseitigen Anschluß der Energieversorgungsleitung (4) und besitzt ferner hausgeräteseitig Anschlußelemente (7) für den hausgeräteseitigen Anschluß der Steuerdatenleitung (3) und Anschlußelemente (8) für den hausgeräteseitigen Anschluß der Energieversorgungsleitung (4), wobei die Anschlußelemente (7) in der Weise ausgestaltet sind, daß an diese eine Lichtleiter-Steuerdatenleitung (31) oder eine metallische Steuerdatenleitung (32) anschließbar sind.

## Beschreibung

Die Erfindung betrifft eine Vorrichtung zur Verbindung eines elektrischen Hausgeräts mit einem Steuerungssystem nach dem Oberbegriff des Anspruchs 1.

Aus der deutschen Patentanmeldung DE 44 46 962.4 ist eine Schaltungsanordnung zur Steuerung elektrischer Hausgeräte bekannt, die untereinander mit einem zentralen Rechner und/oder einer Anzeigeeinrichtung verbindbar sind, wobei den Hausgeräten jeweils eine lokale Steuerung und jeweils ein Speicher zur Zwischenspeicherung von Daten zugeordnet sind. In der lokalen Steuerung eines Hausgeräts ist dabei ein in der Weise ausgestaltetes Steuerungsprogramm zugeordnet. das aus Meß- und/oder Zustandsdaten des jeweiligen Hausgeräts nach einer ersten Verarbeitungsvorschrift erste Zwischenwertdaten gebildet werden. In Abhängigkeit der ersten Zwischenwertdaten oder in Abhängigkeit extern gebildeter zweiter Zwischenwertdaten werden nach einer zweiten Verarbeitungsvorschrift Stellglieder des Hausgeräts gesteuert.

Aus der DE-OS 31 20 723 ist ein Küchenblock mit elektronischer Steuereinrichtung bekannt. Dieser Küchenblock weist eine Halterung mit rasterartig angeordneten Halteelementen, Energieversorgungselementen und Steuerungselementen auf, an der rasterartig eine Mehrzahl von Küchengeräte-Modulen lösbar befestigbar sind, die mit der Befestigung an der Halteeinrichtung mit einer elektronischen Steuereinrichtung und Energieversorgungseinrichtung in Wirkverbindung bringbar sind. In diesem Zusammenhang ist vorgeschlagen worden, daß die elektronische Steuereinrichtung als mit den Energieversorgungselementen verbundene Kommunikations- und Steuereinheit ausgebildet ist, die einen Mikroprozessor mit Speicheranordnung aufweist, der mittels eines Bedienfeldes programmierbar ist. Die Steuereinrichtung ist über ein optoelektronisches Kommunikations-Interface mit einem Lichtleiter-Datenbus verbunden, der mit den Küchengeräte-Modulen in Wirkverbindung steht.

Steuerungssysteme zur Steuerung einer Mehrzahl von Geräten im häuslichen Bereich, sogenannte Home-Electronic-Systeme (HES), können in der Weise ausgestaltet sein, daß in einem derartigen System für die anzuschließenden Geräte ein Anschluß zur Energieversorgung und einen Datenanschluß vorgesehen wird. Vorzugsweise kann dabei der Datenanschluß als Lichtleiter ausgeführt sein. Im System können Schnittstellen vorgesehen sein, an die die Hausgeräte anzuschließen sind.

Die an ein derartiges Steuerungssystem anzuschließenden Hausgeräte haben entsprechende Energieversorgungsanschlüsse bzw. -leitungen und Datenleitungen aufzuweisen. Hausgeräte, die diese Voraussetzungen nicht erfüllen, lassen sich an das Steuerungssystem nicht anschließen.

Ausgehend von diesem Stand der Technik liegt der Erfindung die Aufgabe zugrunde, eine Vorrichtung der eingangs genannten Art anzugeben, die einen Anschluß von Hausgeräten ermöglicht, die hinsichtlich ihres Energieversorgungsanschlusses nicht für den Anschluß an das Steuerungssystem vorbereitet sind.

Die Lösung dieser Aufgabe erfolgt durch eine Vorrichtung, die in den Ansprüchen definiert ist.

Die Vorrichtung erweitert die Gruppe der an das Steuerungssystem anschließbaren Hausgeräte. Diese Anschlußmöglichkeit ist für die Besitzer von Steuerungssystemen von außerordentlichem Interesse, da durch die erfindungsgemäße Vorrichtung auch solche Hausgeräte ankoppelbar sind, die hinsichtlich ihrer Energieversorgung, das heißt hinsichtlich der konsttuktiven Ausgestaltung der Energieversorgungsanschlußelemente für die Ankopplung nicht vorbereitet sind.

Die Erfindung wird nun anhand der Zeichnung beschrieben.

Es zeigt
- Fig. 1: eine erste Ausführungsform der erfindungsgemäßen Vorrichtung; und
- Fig. 2: eine zweite Ausführungsform der erfindungsgemäßen Vorrichtung.

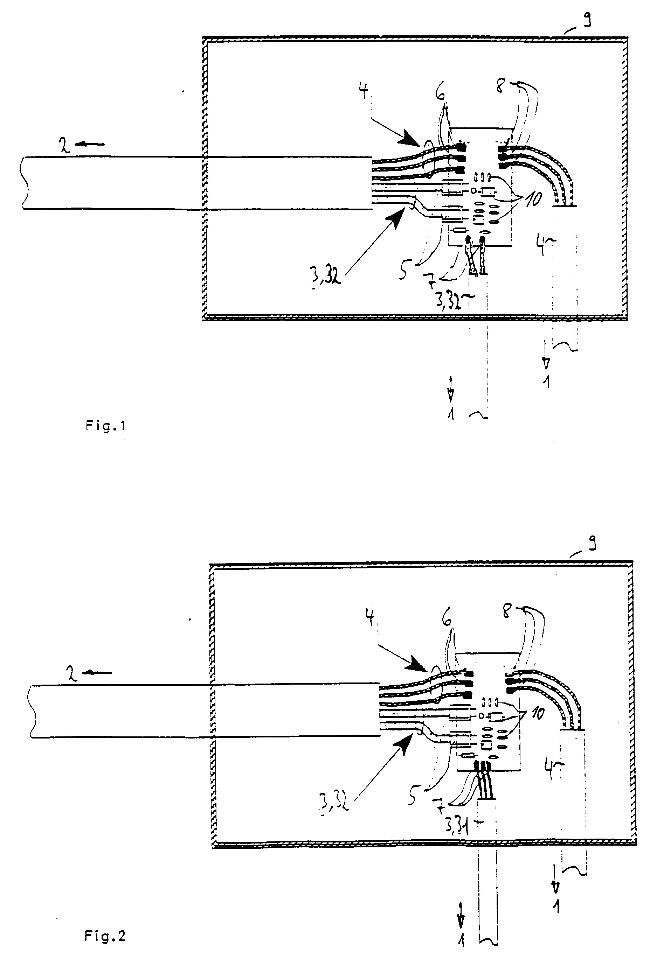

Die in den Figuren 1 und 2 dargestellte erfindungsgemäße Vorrichtung verbindet ein Hausgerät 1 mit einem Steuerungssystem 2 über eine Steuerdatenleitung 3 und eine Energieversorgungsleitung 4. Über die Steuerdatenleitung 3 werden insbesondere bidiektional Steuerdaten zwischen Steuerungssystem 2, insbesondere einer zentralen Steuerung, und Hausgeräten 1 übertragen. Das Energieversorgungskabel 4 dient insbesondere einer 230Volt-Spannungsversorgung der Hausgeräte 1.

Die erfindungsgemäße Vorrichtung weist steuerungssystemseitig zwei erste Anschlußelemente 5 für den steuerungssystemseitigen Anschluß einer Lichtleiter-Steuerdatenleitung 31 und drei zweite Anschlußelemente 6 für den steuerungssystemseitigen Anschluß der Energievensorgungsleitung 4 auf. Hausgeräteseitig weist die Vorrichtung dritte Anschlußelemente 7 für den hausgeräteseitigen Anschluß der Steuerdatenleitung 3 und drei vierte Anschlußelemente 8 für den hausgeräteseitigen Anschluß der Energieversorgungsleitung 4 auf.

Die Anschlußelemente 5, 6, 7 und 8 sind in den Figuren lediglich schematisch auf einer Platine dargestellt. Auf dieser Platine können Schaltungselemente 10 angeordnet sein, die der Kopplung der steuerungssystemseitigen und der hausgeräteseitigen Leitungen bzw. der entsprechenden Anschlußelemente 4, 8 und 5, 6 dienen.

Die dritten Anschlußelemente 7 sind entweder in der Weise ausgestaltet, daß an diese eine Lichtleiter-Steuerdatenleitung 32 anschließbar sind (Figur 1). Alternativ hierzu sind die dritten Anschlußelemente 7 in der Weise ausgestaltet, daß an diese eine metallische Steuerdatenleitung 31 anschließbar ist (Figur 2).

In der erfindungsgemäßen Vorrichtung werden also die Steuerdatenleitung 3 und die Energieversorgungsleitung 4 aufgetrennt und einzelnen wieder aus der Vorrichtung herausgeführt.

Die Vorrichtung kann, insbesondere die vorstehend genannte Platine, eine in den Figuren nicht dargestellte optisch-elektrische Umsetzereinrichtung aufweisen, die von der an die ersten Anschlußelementen 5 angeschlossenen Lichtleiter-Steuerdatenleitung 32 in optischer Form übertragenen Steuerdaten optisch-elektrisch umsetzt.

Vorzugsweise sind die vierten Anschlußelemente 8 als Stiffaufnahmeelemente einer elektrischen Steckdose ausgebildet.

Weiterhin weist die Vorrichtung in der Figur nicht dargestellte Befestigungselemente auf, die eine Befestigung mit dem Hausgerät 1 z.B. an der Geräterückseite ermöglichen. Diese Befestigungselemente ermöglichen insbesondere eine lösbare Befestigung mit dem Hausgerät, wobei die Befestigungselemente insbesondere eine Rastverbindung mit dem Hausgerät ermöglichen.

De Vorrichtung ist durch ein Gehäuse 9 verschließbar, das in der Figur im Schnitt dargestellt ist und insbesondere aus Kunststoff besteht. Die erfindungsgemäße Vorrichtung ist vorzugsweise direkt an dem steuerungssystemseitigen Kabel, das die Steuerdatenleitung 3 und die Energieversorgungsleitung 4 enthält (links in den Figuren), befestigt.

An die Vorrichtung kann ein Kaltgerätestecker für die 230V-Spannungsversorgung direkt angespritzt werden, so daß die Vorrichtung als vergrößerter Kaltgerätestecker fungiert. Die separat aus der Vorrichtung herausgeführte Steuerdatenleitung kann wie bereits beschrieben als Lichtleiter oder als elektrische (metallische) Leitung realisiert sein.

## Patentansprüche

1. Vorrichtung zur Verbindung eines elektrischen Hausgeräts mit einem Steuerungsystem, wobei die Vorrichtung das Hausgerät (1) mit dem Steuerungssystem (2) über eine Steuerdatenleitung (3) und eine Energieversorgungsleitung (4) verbindet, **dadurch gekennzeichnet,**
daß die Vorrichtung steuerungssystemseitig erste Anschlußelemente (5) für den steuerungssystemseitigen Anschluß einer Lichtleiter-Steuerdatenleitung (31) und zweite Anschlußelemente (6) für den steuerungssystemseitigen Anschluß der Energieversorgungsleitung (4) aufweist.
daß die Vorrichtung hausgeräteseitig dritte Anschlußelemente (7) für den hausgeräteseitigen Anschluß der Steuerdatenleitung (3) und vierte Anschlußelemente (8) für den hausgeräteseitigen Anschluß der Energievensorgungsleitung (4) aufweist, und
daß die dritten Anschlußelemente (7) entweder in der Weise ausgestaltet sind, daß an diese eine Lichtleiter-Steuerdatenleitung (31) anschließbar sind,
oder daß die dritten Anschlußelemente (7) in der Weise ausgestaltet sind, daß an diese eine metallische Steuerdatenleitung (32) anschließbar ist.

2. Vorrichtung nach Anspruch 1, **dadurch gekennzeichnet,** daß die dritten Anschlußelemente (7) in der Weise ausgestaltet sind, daß an diese eine metallische Steuerdatenleitung (32) anschließbar ist, und daß die Vorrichtung eine optisch-elektrische Umsetzereinrichtung (9) aufweist, die von der an den ersten Anschlußelementen (5) angeschlossenen Lichtleiter-Steuerdatenleitung in optischer Form übertragenen Steuerdaten optisch-elektrisch umsetzt.

3. Vorrichtung nach einem der vorstehenden Ansprüche, **dadurch gekennzeichnet,** daß die vierten Anschlußelemente (8) als Stiftaufnahmeelemente einer elektrischen Steckdose ausgebildet sind.

4. Vorrichtung nach einem der vorstehenden Ansprüche, **dadurch gekennzeichnet,** daß die Vorrichtung Befestigungselemente aufweist, die eine Befestigung mit dem Hausgerät (1) ermöglichen.

5. Vorrichtung nach Anspruch 4, **dadurch gekennzeichnet,** daß die Befestigungselemente eine lösbare Befestigung mit dem Hausgerät (1) ermöglichen.

6. Vorrichtung nach einem der Ansprüche 4 oder 5, **dadurch gekennzeichnet,** daß die Befestigungselemente eine Rastverbindung mit dem Hausgerät (1) ermöglichen.

7. Vorrichtung nach einem der vorstehenden Ansprüche, **dadurch gekennzeichnet,** daß die Vorrichtung durch ein Gehäuse (9) verschließbar ist.

8. Vorrichtung nach Anspruch 7, **dadurch gekennzeichnet,** daß das Gehäuse (9) aus Kunststoff besteht.
